# EUROPÄISCHE PATENTANMELDUNG

(11) **EP 0 982 648 A2**
(43) Veröffentlichungstag der Anmeldung: **01.03.2000**
(21) Anmeldenummer: 99115986.4
(22) Anmeldetag: 13.08.1999
(51) Int. Cl.: G06F 1/00

(54) **Anordnung zur Indentifizierung einer für den Zugang zu einem Datenverarbeitungssystem berechtigten Person mittels Fingerabdruck**

(30) Priorität: 27.08.1998 DE 19839017
(71) Anmelder: Siemens PC Systeme GmbH & Co. KG, 86199 Augsburg (DE)
(72) Erfinder: Acher, Gottfried, 86343 Königsbrunn (DE)
(74) Vertreter: Epping, Wilhelm, Dr.-Ing.

(57) **Zusammenfassung**

Die Anordnung enthält neben wenigstens einer Vorrichtung zur Eingabe eines alphanumerischen Passwortes eine zusätzliche Vorrichtung zur Erkennung von Fingerabdrücken, wobei sämtliche Elemente zur Bildverarbeitung und Auswertung des Fingerabdruckes in einer Einheit zusammengefasst sind, an deren Ausgang ein Passwort generierbar ist, das über eine für die Übertragung des Passwortes ausgebildete Standardschnittstelle an das Datenverarbeitungssystem übertragbar ist.

## Beschreibung

Die vorliegende Erfindung bezieht sich auf ein System für die Erkennung von Fingerabdrücken entsprechend dem Oberbegriff des unabhängigen Patentanspruches 1.

Im Rahmen der Zugangssteuerung von Datenverarbeitungssystemen in Unternehmen, auf denen kritische Informationen gespeichert werden, ist man mehr und mehr bestrebt, die Zugangsberechtigung der Benutzer durch die Nutzung unveränderlicher Eigenschaften des jeweiligen Benutzers abzuprüfen.

Ideale Voraussetzungen hierfür bieten Fingerabdrücke, die bekanntlicherweise individuell unterschiedlich sind und eine Person eindeutig identifizieren. Der Fingerabdruck besteht aus einem einzigartigen und unverwechselbaren Muster von Linien und Linienenden, Verzweigungen und Wirbeln, die ihn vom Abdruck jedes anderen Menschen unterscheiden.

Eine bekannte Vorgehensweise bei der Nutzung von Fingerabdrücken für die Zugangssteuerung von Datenverarbeitungssystemen besteht darin, das Bild des jeweiligen Fingerabdrucks zu erfassen und über eine spezielle leistungsfähige und in der Regel teure Schnittstelle zum Datenverarbeitungssystem, wie z.B. einem PC, zu übertragen. Diese Vorgehensweise erfordert jedoch einen sehr großen Aufwand, da die zu übertragenden Bildinformationen eine große Datenmenge darstellen, die bei gegebenenfalls notwendiger Verschlüsselung noch zusätzlich vergrößert werden. Die Verarbeitung der übertragenen Bilddaten im Datenverarbeitungssystem erfolgt dabei entweder mittels Betriebssystem-gebundener Software oder auf der Basis von in das BIOS der jeweiligen Datenverarbeitungsanlage eingebundenen Software.

Bei einer anderen, aus GB 23 12 040 bekannten Vorgehensweise wird, ausgehend von einer Computer-Maus mit Fingerabdrucksensor, aus den Fingerabdruckdaten ein benutzerspezifischer Code gebildet, der über die Mausleitung an den Personalcomputer übertragen wird.

Vorgehensweisen ist gemeinsam, daß jedes Datenverarbeitungssystem, das mit einer entsprechenden Fingerabrdruckerkennung ausgestattet werden soll, an das Fingerabruck-Erkennungssystem angepaßt werden muß. Dies führt zu einem für jedes Datenverarbeitungssystem immer wieder anfallenden Entwicklungsaufwand sowie damit zusammenhängenden Kosten. Darüber hinaus besteht die andauernde Gefahr von Kompatibilitätsproblemen bei Veränderungen am Betriebssystem oder der Anwendungssoftware. Im Falle der Verarbeitung der Bilddaten im Datenverarbeitungssystem mittels einer Betriebssystemgebundenen Software ist die Fingerabdruckerkennung darüber hinaus nur ablauffähig, wenn das Betriebssystem bereit ist, es ist kein Bootschutz möglich und die Bilderkennungssoftware muß an das jeweilige Betriebssystem angepaßt werden.

Erfolgt die Verarbeitung der Bilddaten in dem Datenverarbeitungssystem auf der Basis von einer in das BIOS der jeweiligen Datenverarbeitungsanlage eingebundenen Software, so ist ein großer Arbeitsspeicher erforderlich, der teuer ist und für den in der Regel kein Platz vorhanden ist, wobei die Fingerabdruckerkennung in diesem Falle ausschließlich als Bootschutz funktioniert, aber für die Anwendungssoftware nicht mehr zur Verfügung steht.

Die Aufgabe der vorliegenden Erfindung ist es daher, eine Fingerabdruckerkennung vorzusehen, die an beliebigen Datenverarbeitungssystemen, unabhängig vom Betriebssystem, genutzt werden kann, und die keine Veränderung der Hard- oder Software des jeweiligen Datenverarbeitungssystems notwendig macht.

Diese Aufgabe wird durch die kennzeichnenden Merkmale des unabhängigen Patentanspruches 1 gelöst, wobei zweckmäßige Ausführungsformen durch die Merkmale der Unteransprüche beschrieben sind.

Ausgehend von einer zusätzlichen Vorrichtung zur Erkennung von Fingerabdrücken ist nach Maßgabe der Erfindung eine sämtliche Elemente zur Bildverarbeitung und Auswertung des Fingerabdruckes enthaltende Einheit vorgesehen, an deren Ausgang ein Passwort generierbar ist, das über eine für die Übertragung des Passwortes ausgebildete Standardschnittstelle an das Datenverarbeitungssystem übertragbar ist. Der Vorteil besteht insbesondere in der selbständigen Generierung eines alphanumerischen Passwortes, vergleichbar mit der Passworteingabe über eine Tastatur, wobei das neue Passwort gemeinsam mit dem erkannten Fingerabdruck hinterlegt wird. Wesentlich ist dabei, dass das Ausgangssignal der Fingerabdruckvorrichtung einem Passwort entspricht und deshalb über eine zur Übertragung eines Passwortes bestimmte Schnittstelle direkt an das Datenverarbeitungssystem übertragen werden kann. Die Kommunikation zwischen der erfindungsgemäßen Anordnung und dem jeweiligen Datenverarbeitungssystem über die Standardschnittstelle ist dabei vorzugsweise auf die Übertragung des Paßwortes beschränkt, wobei das übertragene Paßwort in dem Datenverarbeitungssystem wie ein bisher übliches über die Tastatur eingegebene Paßwort behandelt und weiterverarbeitet werden kann. Die Standardschnittstelle der Anordnung nach Maßgabe der Erfindung ist darüber hinaus vorzugsweise als Tastaturschnittstelle ausgebildet.

Durch die erfindungsgemäßen Maßnahmen wird die Hard- bzw. Software-kompatible, Betriebssystem-unabhängige Einbindung eines Fingerabdruck-Erkennungssystems in gängige Datenverarbeitungsssystemstrukturen ohne aufwendige Anpassung der Hardware oder Software ermöglicht. Dabei ist sowohl ein Bootschutz als auch ein Paßwortschutz in der Betriebssystemunabhängigen Anwendung möglich. Es sind keine weiteren Schnittstellen erforderlich, und bei einem erhöhten Sicherheitsbedarf ist wegen der geringen Datenmenge eine Verschlüsselung relativ einfach zu bewerkstelligen.

Weitere Merkmale und Vorteile der vorliegenden Erfindung ergeben sich aus der folgenden Beschreibung eines bevorzugten Ausführungsbeispieles im Zusammenhang mit der beigefügten Zeichnung, darin zeigt:

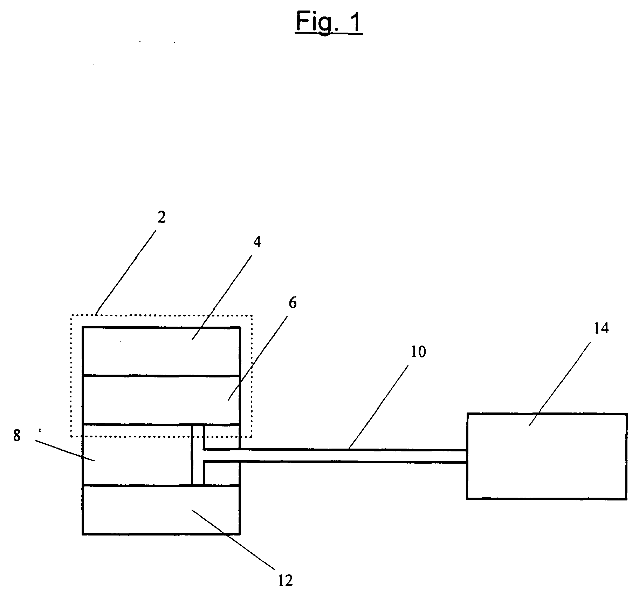

- Fig. 1: eine bevorzugte Ausführungsform der Erfindung.

Die Fig. 1 zeigt eine bevorzugte Ausführungsform der Erfindung.

Vorgesehen ist dabei ein Fingerprintsensor 4, dessen Funktion im Rahmen Fingerabdruckerkennung es ist, den Fingerabdruck einer Person, die Zugang zu einem wie auch immer gearteten Computer-System oder ähnlichem, der individuell unterschiedlich ist und die Person durch sein einzigartiges und unverwechselbaren Muster von Linien und Linienenden, Verzweigungen und Wirbeln die den Figerabdruck vom Abdruck jedes anderen Menschen unterscheidet, eindeutig identifiziert, mit einer Kamera aufzunehmen, abzutasten, zu scannen, durch Wäremeabbildung zu erfassen oder in einer anderen geeigneten Weise für die weitere Verarbeitung innerhalb eines Erkennungssystemes bereitzustellen.

Desweiteren ist eine aus einem Prozessor und einer entsprechenden Bildverarbeitungssoftware bestehende Einheit 6 vorgesehen, die den durch den Fingerprintsensor 4 aufgenommenen Fingerabdruck der Zugang zu dem jeweiligen System begehrenden Person weiterverarbeitet, indem er digital aufbereitet und systematisch auf charakteristische Merkmale hin untersucht wird, die sodann mit in einem (nicht dargestellten) Speicher hinterlegten Informationen verglichen wird. Der Prozessor und die Bildverarbeitungssoftware sind dabei so angelegt, daß selbständig ein alphanumerisches Paßwort generiert werden kann. Das so generierte Paßwort ist vergleichbar mit einem über die Tastatur eingegebenen Paßwort und wird vorzugsweise zusammen mit dem erkannten Fingerabdruck in einem entsprechenden (nicht dargestellten) Speicher hinterlegt.

Weiterhin ist nach Maßgabe der in Figur 1 dargestellten Ausführungsform der Erfindung ein Interface Manager 8 vorgesehen, der der Koordination der Übertragung von Signalen des Fingerabdrucksensors, des Prozessors und der Bildverarbeitungssoftware sowie der Signale von einer herkömmlichen Tastatur 12 dient.

Bei der Anordnung zur Erkennung von Fingerabdrücken für die Zugangssteuerung von Datenverarbeitungssystemen nach Maßgabe der in Figur 1 dargestellten Ausführungsform sind dabei sämtliche Elemente für die Erkennung eines Fingerabdruckes, d.h. der Fingerprintsensor 4, sowie der Prozessor und die Bildverarbeitungssoftware 6 zur Weiterverarbeitung des jeweiligen erkannten Fingerabdruckes in einer Einheit 2 zusammengefaßt.

Die Einheit 2 wie auch die Tastatur 12 sind jeweils mit dem Interface Manager 8 verbunden, der mit einer Standardschnittstelle 10 ausgestattet ist. Die in der Figur 1 dargestellte Standardschnittstelle ist dabei als herkömmliche Tastaturschnittstelle ausgebildet, wobei auch andere Arten von Standardschnittstellen, wie z.B. serielle oder parallele Schnittstellen denkbar sind, die anstelle der Tastaturschnittstelle zur Anwendung kommen können.

Über die bereits beschriebenen Elemente hinaus ist in der Figur 1 ein Datenverarbeitungssystem 14 schematisch dargestellt. Dieses Datenverarbeitungssystem 14 stellt dasjenige System dar, welches durch die Fingerprinterkennung vor einem unberechtigten Zugang geschützt werden soll.

Das Datenverarbeitungssystem 14 kommuniziert wiederum über die Standardschnittstelle 10, die im vorliegenden Fall als Tastaturschnittstelle ausgebildet ist, mit dem ebenfalls mit der Standardschnittstelle 10 verbundenen Interfacemanager 8 und erhält auf diesem Wege das durch die den Fingerprintsensor 4 sowie den Prozessor und die Bildverarbeitungssoftware 6 zur Weiterverarbeitung des erkannten Fingerabdruckes enthaltenden Einheit 2 erzeugte Paßwort sowie das zusammen mit dem Paßwort zu hinterlegende Abbild des erkannten Fingerabdruckes.

Die vorliegende Erfindung stellt damit eine an beliebigen Datenverarbeitungssystemen zu betreibende Fingerprinterkennung zur Verfügung, die unabhängig vom Betriebssystem ist und eingesetzt werden kann, ohne die Hard- und Software verändern zu müssen. Die an das zu schützende Datenverarbeitungssystem zu übertragenden Datenmengen können klein gehalten werden, und es sind keine speziellen leistungsfähigen Schnittstellen notwendig, die ein derartiges Zugangssteuerungssystem teuer machen. Durch die Maßnahmen der vorliegenden Erfindung kann die Fingerprinterkennung daher als wirtschaftliche und sichere Methode der Zugangssteuerung im breiten Markt eingeführt werden.

## Patentansprüche

1. Anordnung zur Identifizierung einer für den Zugang zu einem Datenverarbeitungssystem berechtigten Person, unter Verwendung wenigstens einer Vorrichtung zur Eingabe eines alphanumerischen Passwortes,
**dadurch gekennzeichnet**, daß, ausgehend von einer zusätzlichen Vorrichtung zur Erkennung und Auswertung von Fingerabdrücken, eine sämtliche Elemente zur Bildverarbeitung und Auswertung des Fingerabdruckes enthaltende Einheit (2) vorgesehen ist, an deren Ausgang ein Passwort generierbar ist, das über eine für die Übertragung des Passwortes ausgebildete Standardschnittstelle an das Datenverarbeitungssytem übertragbar ist.

2. Anordnung nach Anspruch 1, **dadurch gekennzeichnet**, daß die Elemente für die Erkennung eines Fingerabdruckes (4) sowie für die Bildverarbeitung einer erkannten Fingerabdruckes (6) aus einem Fingerprintsensor (4) und einem durch eine Bildverarbeitungssoftware gesteuerten Prozessor (6) bestehen.

3. Anordnung nach Anspruch 1 oder 2, **dadurch gekennzeichnet**, daß die Kommunikation über die Standardschnittstelle (10) mit dem Datenverarbeitungssystem (14) auf die Übertragung eines Paßwortes beschränkt ist.

4. Anordnung nach einem der vorhergehenden Ansprüche, **dadurch gekennzeichnet**, daß die Anordnung Maßnahmen zur Verschlüsselung des Paßwortes vorsieht.

5. Anordnung nach einem der vorhergehenden Ansprüche, **dadurch gekennzeichnet**, daß die Standardschnittstelle eine Tastaturschnittstelle (10) ist.
